# EUROPEAN PATENT SPECIFICATION

(11) **EP 1 866 993 B1**
(45) Date of publication and mention of the grant of the patent: **27.03.2013**
(21) Application number: 06720936.1
(22) Date of filing: 21.02.2006
(51) Int. Cl.: H01M 8/04, H01M 8/06, H01M 16/00

(54) **HYDROGEN AND ELECTRICAL POWER GENERATOR**
GENERATOR FÜR WASSERSTOFF UND ELEKTRISCHEN STROM
GENERATEUR D'HYDROGENE ET D'ELECTRICITE

(30) Priority: 28.03.2005 US 907294
(43) Date of publication of application: 19.12.2007
(73) Proprietor: Honeywell International Inc., Morristown, NJ 07960 (US)
(72) Inventor: BONNE, Ulrich, Hopkins, MN 55343 (US); EICKHOFF, Steven, J., Plymouth, MN 55442 (US); WOOD, Roland, A., Bloomington, MN 55420 (US)
(74) Representative: Buckley, Guy Julian
(86) International application number: PCT/US2006/006098
(87) International publication number: WO 2006/104603

(56) References cited:
- EP-A2- 1 372 205
- WO-A2-2004/075375
- WO-A2-2005/013403
- US-A- 3 594 232
- US-A1- 2002 182 459
- US-A1- 2003 215 679
- US-B1- 6 393 894

## Description

### Background

The invention pertains to hydrogen gas generation for usage by a fluid analyzer, and particularly to both hydrogen and electrical power generation for the fluid analyzer.

### Summary

The present invention relates to hydrogen and electrical power generation for fluid analyzer that use both hydrogen and electrical power for operation. Further, a by-product of power generation may be recycled for further hydrogen and power generation.

US 2003/215679 A1 discloses a system coupled to the cathode exhaust of a fuel cell which preferentially oxidises carbon monoxide to remove it from exhaust gasses. The system comprises a reformer and a catalytic burner which produces a mixture of gasses including H₂ to the gas purification reactor. However, the purification reactor does not require both hydrogen and electric power for operation.

WO 2005/013403 A2 discloses a gas purification reactor for use in a reformer fuel cell system in which vaporized methanol and water are reacted to from hydrogen, water, carbon dioxide and carbon monoxide. In order to prevent poising of the fuel cell, the reactor removes carbon monoxide from the product stream before gas is introduced to the fuel cell. An exhaust is included on the fuel cell which may recirculate some of the purified gas. However, the reactor does not require both hydrogen and electrical power for operation.

Fluid analysers are known devices. For example, US 6 393 894 discloses a device comprising a concentrator and fluid sensor assembly with pulsed heaters energised in a time phase sequence.

### Brief Description of the Drawing

Figure 1 is a diagram of a hydrogen gas and electrical power generator integrated with a fluid analyzer, such as a fluid chromatograph, that uses both the gas and power;

Figure 2 is similar to Figure 1 except that the device fluid analyzer is a chromatograph with a preconcentrator and has electrical power storage;

Figure 3 reveals another configuration of a hydrogen and electrical power generator;

Figure 4 shows a fluid analyzer that may be used in conjunction with the present generator;

Figures 5 and 6 are two views of the heater arrangement for the fluid analyzer; and

Figure 7 shows a micro gas analyzer that may have a hydrogen and power generator structurally integrated within the analyzer.

### Description

There may be battery powered devices that need H₂ gas flow and power for their operation, such as a field-portable FID (i.e., a H₂-flame ionization detector), whether as a stand-alone portable FID or as part of a GC (gas chromatograph) detector to scan for natural gas leaks, and a micro GC. These devices may have an H₂ or H₂-N₂ gas tank strapped to one side, which is generally bulky and heavy, which needs to be replaced or re-filled periodically, and which may accrue demurrage charges. Additionally, the portable devices may use heavy batteries, which can render the 8-hour leak-detection work shift with such instruments somewhat tiresome.

The present invention, in its various aspects, is as set out in the accompanying claims.

The present invention may provide a better source for H₂ in a form of a special H₂ fuel cell. This cell may be more compact (i.e., having higher energy density), have an absence of the heavy pressurized steel tanks, generate electrical power besides H₂, store such power for an ease of cold starts, or peak power needs, and thus obviate a need for heavy 8-hour batteries. The generator may recycle the water it generates.

The present generator may provide H₂ for a fuel cell. The generator may convert 1.4 cm³ of LiAIH₄ and 1.6 cm³ of H₂O to 2000 cm³ of H₂. This converting may be expressed chemically as

LiAIH₄ + 4 H₂O >> 4 H₂ + AI(OH)₃ + LiOH(1) ΔH(form.) in kJ/mdl:

-117.2-4x285.83>>0-1273-487-19.2=-518.7 kJ.

This H₂ may then generate about 128 Wh of electrical energy in a fuel cell. The fuel cell may have an energy density that is 1.5 to 2 times higher than presently available commercial lithium batteries. An example lithium battery may be similar in size to a "C-cell" battery. Such C-cell battery may be a Tekcell™ CR123A 3 volt battery having a 1.7 cm diameter, 3.5 cm length, at about 8 cm³ and 17 grams. The power output may be about 4.2 Wh or 0.48 mW for a year. A larger battery capable of a power draw of about ten watts would have a size of about 300 cm³. There may be a fuel cell battery designed for an average power draw of
2 milliamps (mA) which is an equivalent to a power of 0.6 V x 2 mA = 1.2 mW (milliwatts).

For an illustrative example, the hydrogen and power needs of a micro gas analyzer may be about 3 cm³ per minute, which may lead to 2000 cm³ to last for about 650 minutes, Which may exceed a goal of operating the micro gas analyzer with no more than an average of 0.25 W. The power equivalent to about 3 cm³/minute may be stated as the following equivalency. One Faraday (96,500 Cb) corresponds to 1 mole, so that one may equate (96500 Cb x 3 V) to 22,415 cm³, that is, 3cm³/minute is equivalent to (3/22415)(96500*3/60)=0.646 W.

The micro fuel cell may allow the chemical fuel to react with the natural water diffusing from the water, since it does not need a liquid pump in the generator. This device may produce about 0.1 cm³/minute of H₂. To generate 3 cm³/minute of H₂, they would need to transfer the water 30 times faster. This might be possible using a natural diffusion of water vapor, if a Gore-Tex™ membrane in the cell is increased to an area of about 2"x2". Or one may include a water pump. The water pumping rate may need to be about 4x10⁻⁵ cm³/second.

Another challenge to overcome for conserving energy is to let the generated H₂ adopt the function of the H₂ carrier gas pump and replace the pump. If air samples need to be analyzed and its target analytes need to be preconcentrated, at least the separation can then be made in a H₂-carrier gas, after the sample is injected into the H₂ gas stream. An advantageous aspect may be that the generator can generate H₂ under pressure. Another aspect may be that the fuel cell can draw He against a vacuum, by virtue of its affinity to react with O₂ from the air to form water, which upon condensation may reduce the absolute pressure in the fuel cell a little due to the volume reduction resulting from the following reaction.

2H₂ + O₂ + 4.83N₂ >> 2H₂O(liq) + 4.83N₂.

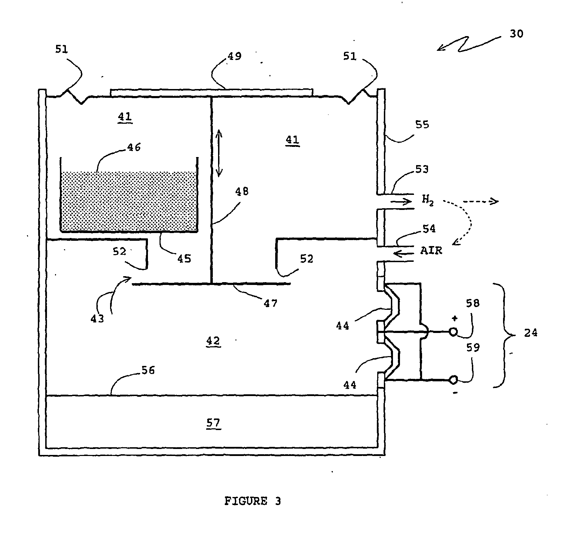

This reaction may amount to a volumetric reduction to about 4.83/7.83 = 0.617 of the original volume or pressure. This assumes that the H₂ fuel cell can facilitate the above reaction against such a pressure difference. The present H₂ generation rates may be only limited by the rate of permeation of water (liquid or gas) through the shown Gore-Tex™ membranes which can result in a continuous but uncontrolled H₂ and power generation, especially if there are leaks in the pneumatic valve that controls the water supply rate to the H₂ generator, as shown in Figure 3.

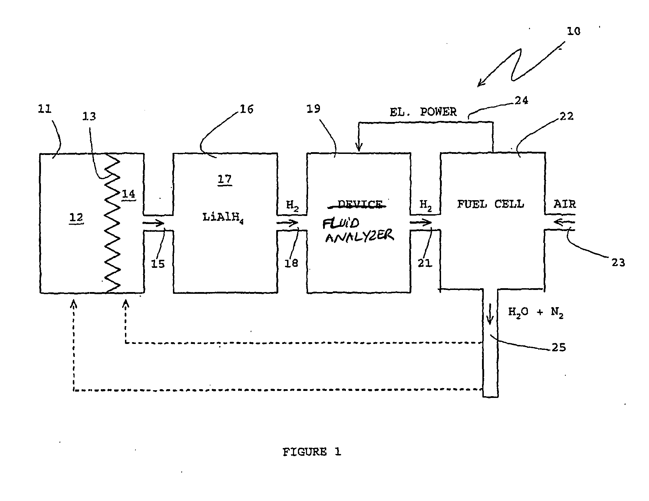

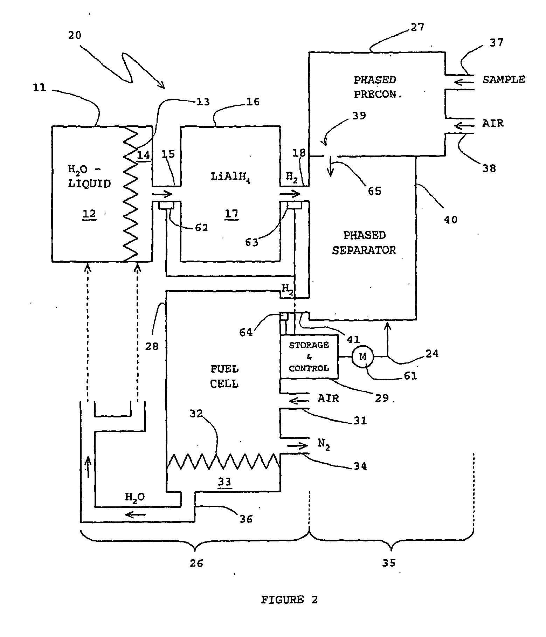

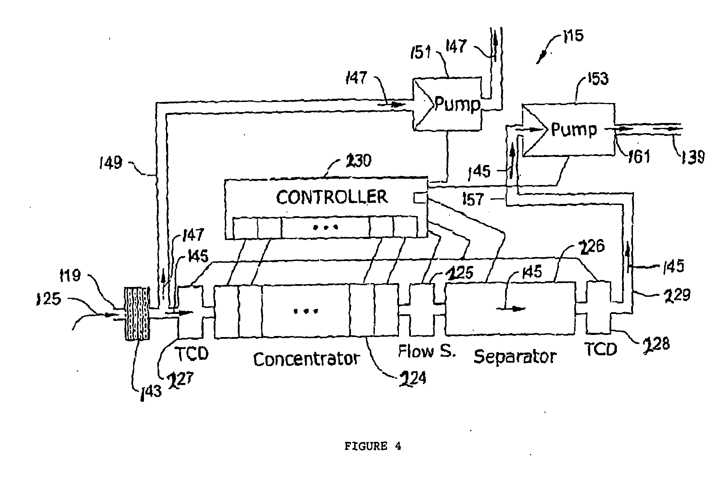

The generator system may have the building blocks of Figures 1 and 2, to operate a device such as a GG of FID, or any other fluid analyzer having a need of both H₂ and electrical power. Figure 4 shows an illustrative example of a micro GC that may utilize H₂ and electrical power. The brackets 26 and 35 in Figure 2 show the H₂ and power generator, and the device to be electrically powered and supplied with H₂, respectively. The non-disposable or non-rechargeable parts may be incorporated in the device package, such as the electric energy storage device, which might not be part of the generator package. A similar box may be drawn for the power-generation controls, so that no power would be generated when the storage is full and the device does not need it.

The sensor system may have a disposable (or rechargeable) "battery" or generator, which generates and provides H₂ to separate "devices", before this H₂ is returned and used in the generator to also generate electric power via known H₂ fuel cell technology. A hydrogen gas generator may supply the H₂ and electrical power needs of a fluid analyzer such as an FID and/or micro gas analyzer or a gas calibration system. The gas generator employ hydrogen-containing chemicals. The hydrogen-containing chemicals are water and a metal hydride. In a combination of the generator and fluid analyzer, the fluid analyzer may make a non-destructive use of the generated H₂ before returning it to the generator. In the generator, the returned hydrogen may be passed to a fuel cell to generate electrical power. The generated electrical power may be stored in a storage device, which may be one or more of the following, including a capacitor, a super capacitor and a rechargeable battery. The water generated in the fuel cell may be recycled to the hydrogen generator to make more hydrogen, and thus reduce the water storage weight and volume. The control of hydrogen flow and pressure may be regulated based on the power drawn by the fluid analyzer. The excess power generated with the needed use of hydrogen may be stored. Such power may be used for data processing, wireless transmission, and/or heating/annealing/regeneration of appropriate

The advantages of the generator fluid analyzer system may include a disposable or rechargeable "battery" that generates both H₂ and electrical power. The system may provide for reduced space, weight and total power consumption, which are premium advantages for portable devices. An energy storage of the system may enable sensor start-up during generator delays, reduced generator power waste when H₂ needs exceed the associated power generation, and data processing and transmission without H₂ flow. Also, in the system, recycling the water from the fuel cell back to the H₂ generation block may reduce weight and volume for H₂O storage.

Figure 1 is a diagram of a generator 10 for a fluid analyzer that has a need for H2 and electrical power. An example fluid analyzer 19 may be a (PHASED) micro GC system. The first block 11 may contain a volume 12 for containing an H₂O liquid. Across the block 11 containing volume 12 may be a Gore-Tex™ membrane 1 3 or equivalent material, and a volume 14 on the other side of membrane 13 opposite of volume 12. In volume 14 may be H₂O vapor which may flow through a passage 1 5 into a block 16 having a volume 1 7 containing LiAIH₄. A chemical reaction between the H₂O vapor and LiAIH₄ may result in an H₂ gas (and by-products Al(OH)₃ and LiOH(1). From block 16, the H₂ gas may flow through a passage 18 onto a fluid analyzer 19 which utilizes the H₂ gas and electrical powder. From fluid analyzer 19, H₂ gas may flow to a fuel cell 22 via a passage 21. Air maybe brought into the fuel cell 22 through a passage 23. The fuel cell, as a result from these ingredients, may produce electrical power 24 to be sent to fluid analyzer 19 to operate it. A by-product of the fuel cell 22 reaction may be H₂O and N₂. The H₂O may condense to a liquid and be fed via a tube 25 into volume 12 of block 11, which in turn may result in a process of going through the membrane to form H₂O vapor, as noted above. H₂O from the fuel cell 22 may be fed directly to volume 14 of block 13.

Figure 2 shows another diagram of a system 20 having an H₂ gas and electric power generator with H₂O reuse, to drive a PHASED micro GC 40 with a preconcentrator 27. Blocks 11 and 16 may operate in a similar fashion as those blocks of system 10 of Figure 1. Fuel cell 28 is similar to fuel cell 22, however, it has an output into a storage and control box 29 which may provide for energy storage from fuel cell 28 and power controls, so that no power would be generated when the storage is full and a device 35 connected to it does not need power at that time. Power 24 may go from the storage and control box 29 to the PHASED micro gas analyzer 40. Air may enter fuel cell 28 via passage 31. There may be a Gore-Tex™ membrane 32 to separate the by-products H₂O and N₂ from the fuel cell reaction so that the H₂O may enter volume 33 and N₂ may exit fuel cell 28 via passage 34. H₂O may exit fuel cell 28 via passage 36 and go to block 11 with the liquid H₂O to volume 12 and the H₂O vapor to volume 14.

Device 35 may consist of a preconcentrator 27 and the phased heater micro gas analyzer 40. A sample and air may enter preconcentrator 27 via passages 37 and 38, respectively. The preconditioned sample 65 may be injected or go from preconditioner 27 to gas analyzer 40 via an orifice 39. Analyzer 40 may obtain H₂ gas from the chemical reaction in block 16 producing H₂, via the passage 18. Analyzer 40 may utilize the H₂ as a carrier gas in its process and then pass on H₂ gas to fuel cell 28 via passage 41 where cell 28 may utilize it in the reaction to generate more electrical energy as needed.

In Figure 2, there may also be a meter 61 at the output of fuel cell 28 and/or storage control box 29 for measuring power, and connected to the storage and control box 29. There may be pressure sensors, flow sensors and/or valves 62, 63 and 64 situated at passages 15, 18 and 41, respectively, and connected to the storage and control box 29. With inputs to and outputs from between the sensors and valves and the storage and control box, such things as the control of hydrogen flow and pressure may be regulated based on the power drawn from the fuel cell 22 by the analyzer 40, data processing, wireless transmission and/or heating, annealing/regeneration or appropriate devices and/or mechanisms and their parts, and so on.

Figure 3 shows a schematic view of an H₂ generator combination 30 based on LiAIH₄ from fuel chamber 41, a hydrogen and water chamber 42 and associated fuel cells 44. Fuel chamber 41 may have a container 45 of a fuel 46 and residue. The fuel 46 may include LiAIH₄ which may be combined with water vapor 43 to form H₂ in chamber 41 as permitted by valve plate 47 which may be actuated into an open position by a connecting node 48 moved by a diaphragm 49. Diaphragm 49 may be attached to a flexible but air-tight membrane 51 which permits the movement of diaphragm 49 which opens or closes the valve plate 47 relative to a valve seat 52 as needed for providing H₂ to the fuel cells 44 to output electrical power. H₂ may be provided also from chamber 41 via a passage 53. Air may be provided to chamber 42 for the fuel cells 44 via a passage 54. Power 24 may come from fuel cells 44. The valve plate 47 and seat 52 may form a normally closed or open valve depending ultimately on the need of power 24 from fuel cells 44. Diaphragm 49 may actuate valve plate 47 with a differential pressure external and internal to membrane 51 of container 55 which may be dependent on closure of passages 53 and/or 54. Chamber 42 may have a Gore-Tex™ membrane 56 attached across the bottom portion of container 55 to form a volume 57 which may contain water. The membrane 56 may permit a movement of vapor from volume 57 into volumes 42 and 41. Fuel cells may output a voltage across terminals 58 and 59 to provide the electrical power 24.

Figure 4 reveals certain aspects of a micro gas apparatus 115. The apparatus 115 may be a fluid composition sensor, analyzer or chromatograph, and have a concentrator 224, separator 226, various detectors 227, 225, 228 and a pump 1 51, 1 53. The concentrator may have an array of "phased" heaters that are turned on at different times relative to each other in a fluid stream channel. The apparatus 11 5 may relate to a phased heater array structure, and to application of the structure as a sensor, analyzer or chromatograph for the identification and quantification of fluid components. Such apparatus 115 having such a (phased) heater configuration may be regarded as or referred to as a "PHASED" device. The term "PHASED" also may be regarded as an acronym referring to "Phased Heater Array Structure for Enhanced Detection".

Sample stream 125 may enter an input from pipe or tube 119, to apparatus 11 5, as shown in Figure 4. There may be a particle filter 143 for removing dirt and other particles from the stream of fluid 125 that is to enter apparatus 11 5. A portion 145 of fluid 125 may flow through the first leg of a differential thermal-conductivity detector (TCD), or chemi-sensor (CRD), or photo-ionization sensor/detector (PID), or other device) 227 which may measure photo-ionization current, and a portion 147 of fluid 125 flows through tube 149 to a pump 1 51. By placing a "T" tube immediately adjacent to the inlet of detector 227, sampling with minimal time delay may be achieved because of the relatively higher flow 147 to help shorten the filter purge time. Pump 151 may cause fluid 147 to flow from the output of particle filter 143 through tube 149 and exit from pump 151. Pump 153 may effect a flow of fluid 145 through the sensor via tube 1 57. There may be additional or one pump, and various tube or plumbing arrangements or configurations for system 11 5 in Figure 4. Hydrogen may act as a carrier of a sample in fluid 145.

Fluid 145 may proceed through a concentrator 224, through a flow sensor 225, and a separator 226. From separator 226, fluid 145 may go through sensor or detector 228 and exit tube 229 which may be connected to tube 1 57 and pump 153. Fluid 145 may exit pump 1 53. Concentrator 224 may have heaters that are turned on sequentially as flow 145 moves by them at the same rate or speed of the heaters being turned on so that a heat pulse builds up in the fluid 145. The heat pulse may move through channel 132 of concentrator 224 at the same rate of or in phase with the fluid 145 in a flow through the channel. As the concentrated fluid 145 goes through separator 226, it may be heated for separation purposes. The heaters may be regarded as "phased heaters. A controller 230 may be connected to a concentrator 224 to control the phasing of the heating of the elements 120, 122, ... 124 and 126, for providing a concentrated heat pulse in the flow of fluid 145. Controller 230 may also be connected to separator 226, sensors and/or detectors 227, 225 and 228. Controller 230 may be connected to pumps 151 and 153. Data from detectors 225, 227 and 228 may be sent to controller 230 for processing.

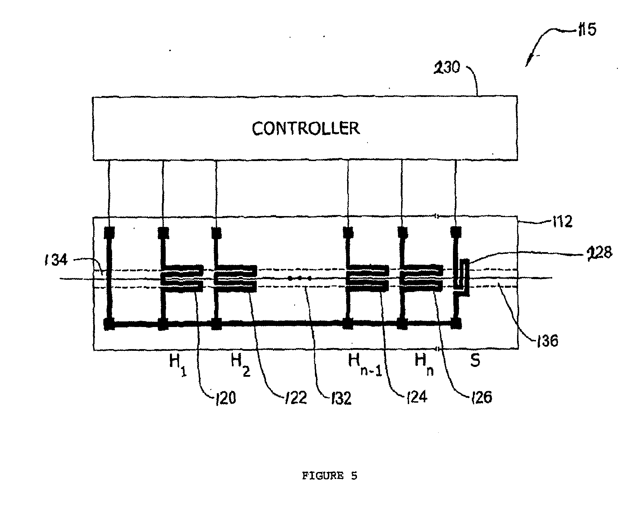

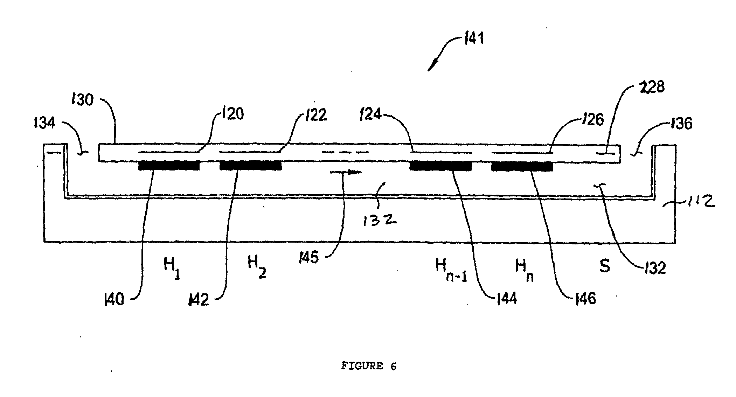

Figure 5 is a schematic diagram of part of the sensor apparatus 115, representing a portion of concentrator 224 or separator 226 in Figure 4. The sensor apparatus may include a substrate 112 and a controller 230. Controller 230 may or may not be incorporated into substrate 112. Substrate 112 may have a number of thin film heater elements 120, 122, 124, and 126 positioned thereon. While only four heater elements are shown, any number of heater elements may be provided, for instance, between two and one thousand, but typically in the 20-100 range. Heater elements 120, 122, 124, and 126 may be fabricated of any suitable electrical conductor, stable metal, or alloy film, such as a nickel-iron alloy. Heater elements 120, 122, 124, and 126 may be provided on a thin, low-thermal mass, low-in-plane thermal conduction, support member 130, as shown in Figure 6. Support member or membrane 1 30 may be made from Si₃N₄ or other appropriate or like material. The heater elements may be made from Pt or other appropriate or like material.

Substrate 112 may have a well-defined single-channel phased heater mechanism 141 having a channel 132 for receiving the sample fluid stream 145, as shown in Figure 6. Substrate 112 may have a defined channel 132 for receiving a streaming sample fluid 145. The channel may be fabricated by selectively etching, silicon channel wafer substrate 112 beneath support member 130. The channel 132 may include an entry port 134 and an exhaust port 136.

the sensor apparatus may also include a number of interactive elements inside channel 132 so that they are exposed to the streaming sample fluid 145. Each of the interactive elements may be positioned adjacent, i.e., for closest possible contact, to a corresponding heater element. For example, in Figure 6, interactive elements 140, 142, 144, and 146 may be provided on the lower surface of support member 130 in channel 132, and be adjacent to heater elements 120, 122, 124, and 126, respectively. There may be other channels with additional interactive film elements which are not shown in the present illustrative example. The interactive elements may be formed from any number of films commonly used in liquid or gas chromatography.

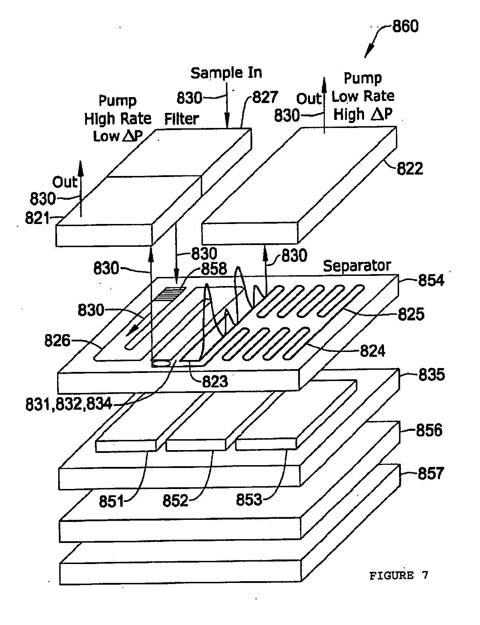

Figure 7 shows an expanded perspective of a micro analyzer. Analyzer may have a channel and a series of heaters situated along the channel. The heaters may turn on in a sequential manner to continually heat a portion of a sample fluid as it moves through the channel. The heaters may provide a heat pulse that moves along the channel at a velocity about the same as a velocity of the portion of the sample fluid moving through the channel. The heaters may cumulatively heat the portion of the sample fluid. There may be a preconcentrator connected to the fluid analyzer.

The lateral dimensions of the package or module 860 of the analyzer may be about 2 cm by 1.3 cm. Module 860 may be a stack of wafers or chips. The vertical dimension of the package may be about 0.7 cm for a volume of about 1.8 cm³. The lower portion of the module 860 may be controller 835 that contains a control electronics 851 chip, a data acquisition and analysis 852 chip and a high frequency drive electronics 853 chip. The lower portion may have a thickness of about 3 millimeters. A middle portion 854 may include pre-concentrator 826, concentrator 823, first separator 824, second separator 825, instrumentation 831, 832 and 834, and at least one channel and the phased heaters 120, 122, 124, ... 126. Portion or wafer 854 may or may not include the ion trap mass spectrometer (ITMS). Spectrometer may be on a separate chip or stack of chips. The middle portion 854 may have a thickness of about one millimeter. The top portion may contain the first pump 821, second pump 822 and filter 827. The top portion may have a thickness of about 3 millimeters. At the bottom of the lower portion of module 860 may be a layer or portion 856 of wireless communication electronics for data transfer and control of micro analyzer. This layer 856 may have a thickness of about 3 millimeters and have about the same lateral area as that of the module 860. Below layer 856 may be a portion for a H₂ generator battery system 857 or power pack or holder having a thickness of about 3.8 millimeters thick and about the same lateral area as that of module 860. The generator system 857 may be thicker (e.g., 10 millimeters) or thinner depending on the power needed for the analyzer, the desired time between recharges and the technology (e.g., lithium) of the battery. If all of the portions, including the wireless electronics and the battery, are adhered together, the total thickness may be about 1.38 centimeters resulting in a volume of about 3.6 cm³. The dimensions may be relaxed if exceptional compactness is not needed. In the latter case, the top portion with the pumps may have an area less than 25 square centimeters and a thickness less than 10 millimeters. The portion 856 for wireless communication may have an area less than 25 square centimeters and a thickness less than 10 millimeters. The lower portion with controller 835 may have an area less than 25 square centimeters and a thickness of less than 10 millimeters. The middle portion 854 may have an area less than 25 square centimeters and a thickness less than 10 millimeters. The portion for the H₂ generator system 857 or its holder may have an area less than 25 square centimeters. The above dimensions may be alternatively less than 2.5 square centimeters in lieu of 25 square centimeters.

## Claims

1. A generator system comprising:
a hydrogen gas generator (11, 16) that is configured to generate hydrogen gas from water and a metal hydride;
an electric power generator (22) connected to the hydrogen gas generator; and
a fluid analyzer (27, 40, 115, 800) connected to the hydrogen gas generator and the electric power generator;
**characterised in that**:
the fluid analyzer is configured to have a need for H₂ gas flow and electrical power for operation;
the hydrogen gas generator (11, 16) is configured to provide hydrogen as a fuel to the electric power generator (22);
the hydrogen gas generator is configured to provide hydrogen to the fluid analyzer; and
the electric power generator is configured to provide electric power to the fluid analyzer.

2. The system of claim 1, wherein the fluid analyzer (27,40, 115, 800) is configured to use hydrogen gas from the hydrogen gas generator (11, 16) in a non-destructive manner, and to return the hydrogen gas to the hydrogen gas generator.

3. The system of claim 1, wherein the fluid analyzer (27,40, 115, 800) is configured to use hydrogen gas from the hydrogen gas generator (11, 16) in a non-destructive manner and to forward the hydrogen gas to the electric power generator (22) as a fuel to generate electrical power.

4. The system of claim 3, wherein:
the electrical power generator (22) is a fuel cell (22);
the fuel cell is configured to generate water which is forwarded to the hydrogen gas generator (11, 16); sand
the hydrogen gas generator is configured to use the water to generate hydrogen gas.

5. The system of claim 5, wherein the fluid analyzer (27, 40, 115, 800) comprises:
a channel (132); and
a plurality of heaters (120, 122, 124, 126) situated along the channel; and
wherein:
the plurality of heaters are configured to turn on in a sequential manner to continually heat a portion of a sample fluid as it moves through the channel;
the plurality of heaters are configured to provide a heat pulse that moves along the channel at a velocity about the same as a velocity of the portion of the sample fluid moving through the channel; and
the plurality of heaters are configured to cumulatively heat the portion of the sample fluid.

6. A method for generating hydrogen and electricity for a fluid analyzer that has a need for H₂ gas flow and electrical power for operation (19) comprising:
1) providing water;
2) converting the water into a vapor;
3) combining the vapor with a metal hydride to generate hydrogen;
4) feeding the hydrogen to the fluid analyzer;
5) providing hydrogen from the fluid analyzer to a fuel cell (44);
6) generating electricity with the fuel cell from the hydrogen;
7) providing electricity to the fluid analyzer
8) converting water generated by the fuel cell into a vapor; and
9) repeating method actions 3-8 in any order as needed.

7. The system of claim 1, wherein the hydrogen gas generator does not include a liquid pump.

8. The system of claim 1, wherein the fluid analyzer is configured to analyze a sample mixed with air.

## Patentansprüche

1. Generatorsystem, das Folgendes umfasst:
einen Wasserstoffgasgenerator (11, 16), der so konfiguriert ist, dass damit Wasserstoffgas aus Wasser und einem Metallhydrid erzeugt wird;
einen elektrischen Stromgenerator (22), der mit dem Wasserstoffgasgenerator verbunden ist; und
einen Fluidanalysator (27, 40, 115, 800), der mit dem Wasserstoffgasgenerator und mit dem elektrischen Stromgenerator verbunden ist,
**dadurch gekennzeichnet, dass**
der Fluidanalysator so konfiguriert ist, dass er einen H₂-Gasstrom und elektrischen Strom für den Betrieb benötigt;
der Wasserstoffgasgenerator (11, 16) so konfiguriert ist, dass er Wasserstoff als einen Brennstoff für den elektrischen Stromgenerator (22) bereitstellt;
der Wasserstoffgasgenerator so konfiguriert ist, dass er Wasserstoff für den Fluidanalysator bereitstellt; und dass
der elektrische Stromgenerator so konfiguriert ist, dass er elektrischen Strom für den Fluidanalysator bereitstellt.

2. System nach Anspruch 1, bei dem der Fluidanalysator (27, 40, 115, 800) so konfiguriert ist, dass er Wasserstoffgas vom Wasserstoffgasgenerator (11, 16) in einer nichtzerstörenden Weise nutzt und das Wasserstoffgas zum Wasserstoffgasgenerator zurückführt.

3. System nach Anspruch 1, bei dem der Fluidanalysator (27, 40, 115, 800) so konfiguriert ist, dass er Wasserstoffgas vom Wasserstoffgasgenerator (11, 16) in einer nichtzerstörenden Weise nutzt und das Wasserstoffgas als einen Brennstoff zur Erzeugung von elektrischem Strom dem elektrischen Stromgenerator (22) zuführt.

4. System nach Anspruch 3, bei dem:
der elektrische Stromgenerator (22) eine Brennstoffzelle (22) ist;
die Brennstoffzelle so konfiguriert ist, dass sie Wasser erzeugt, das dem Wasserstoffgasgenerator (11, 16) zugeführt wird; und
der Wasserstoffgasgenerator so konfiguriert ist, dass er das Wasser zur Erzeugung von Wasserstoffgas nutzt.

5. System nach Anspruch 5, bei dem der Fluidanalysator (27, 40, 115, 800) Folgendes umfasst:
einen Kanal (132); und
mehrere Erhitzer (120, 122, 124, 126), die entlang dem Kanal angeordnet sind; und wobei:
die mehreren Erhitzer so konfiguriert sind, dass sie in einer fortlaufenden Weise eingeschaltet werden, um eine Teilmenge eines sich durch den Kanal bewegenden Probenfluids fortwährend zu erwärmen;
die mehreren Erhitzer so konfiguriert sind, dass sie einen Wärmeimpuls bereitstellen, der sich entlang dem Kanal mit einer Geschwindigkeit bewegt, die in etwa einer Geschwindigkeit der Teilmenge des sich durch den Kanal bewegenden Probenfluids entspricht; und
die mehreren Erhitzer so konfiguriert sind, dass sie die Teilmenge des Probenfluids kumulativ erwärmen.

6. Verfahren zur Erzeugung von Wasserstoff und elektrischem Strom für einen Fluidanalysator, der für den Betrieb (19) einen H₂-Gasstrom und elektrischen Strom benötigt, wobei das Verfahren Folgendes umfasst:
1) Bereitstellen von Wasser;
2) Umwandeln des Wassers in einen Dampf;
3) Kombinieren des Dampfs mit einem Metallhydrid, um Wasserstoff zu erzeugen;
4) Einleiten des Wasserstoffs zum Fluidanalysator;
5) Bereitstellen von Wasserstoff vom Fluidanalysator zu einer Brennstoffzelle (44);
6) Erzeugen von elektrischem Strom mit der Brennstoffzelle aus dem Wasserstoff;
7) Bereitstellen von elektrischem Strom zum Fluidanalysator;
8) Umwandeln von durch die Brennstoffzelle erzeugtem Wasser in einen Dampf; und
9) Wiederholen der Verfahrensschritte 3 - 8 in beliebiger Reihenfolge nach Bedarf.

7. System nach Anspruch 1, bei dem der Wasserstoffgasgenerator keine Flüssigkeitspumpe beinhaltet.

8. System nach Anspruch 1, bei dem der Fluidanalysator so konfiguriert ist, dass er eine mit Luft vermischte Probe analysiert.

## Revendications

1. Système de générateur comportant :
un générateur (11, 16) de gaz hydrogène qui est configuré pour générer du gaz hydrogène à partir d'eau et d'un hydrure métallique ;
un générateur (22) de puissance électrique relié au générateur de gaz hydrogène ; et
un analyseur (27, 40, 115, 800) de fluide relié au générateur de gaz hydrogène et au générateur de puissance électrique ;
**caractérisé en ce que** :
l'analyseur de fluide est configuré pour avoir besoin d'un écoulement de gaz H₂ et d'une puissance électrique pour fonctionner ;
le générateur (11, 16) de gaz hydrogène est configuré pour fournir de l'hydrogène en tant que combustible au générateur (22) de puissance électrique ;
le générateur de gaz hydrogène est configuré pour fournir de l'hydrogène à l'analyseur de fluide ; et
le générateur de puissance électrique est configuré pour fournir une puissance électrique à l'analyseur de fluide

2. Système selon la revendication 1, l'analyseur (27, 40, 115, 800) de fluide étant configuré pour utiliser du gaz hydrogène provenant du générateur (11, 16) de gaz hydrogène de manière non destructive et pour renvoyer le gaz hydrogène au générateur de gaz hydrogène.

3. Système selon la revendication 1, l'analyseur (27, 40, 115, 800) de fluide étant configuré pour utiliser du gaz hydrogène provenant du générateur (11, 16) de gaz hydrogène de manière non destructive et pour transmettre le gaz hydrogène au générateur (22) de puissance électrique en tant que combustible pour générer une puissance électrique.

4. Système selon la revendication 3 :
le générateur (22) de puissance électrique étant une pile (22) à combustible ;
la pile à combustible étant configurée pour générer de l'eau qui est transmise au générateur (11, 16) de gaz hydrogène ; et
le générateur de gaz hydrogène étant configuré pour utiliser l'eau pour générer du gaz hydrogène.

5. Système selon la revendication 5, l'analyseur (27, 40, 115, 800) de fluide comportant :
un conduit (132) ; et
une pluralité d'éléments chauffants (120, 122, 124, 126) situés le long du conduit ; et
la pluralité d'éléments chauffants étant configurée pour s'allumer de manière séquentielle afin de chauffer continuellement une partie d'un échantillon fluide tandis qu'il avance à travers le conduit ;
la pluralité d'éléments chauffants étant configurée pour créer une impulsion thermique qui avance le long du conduit à une vitesse approximativement identique à la vitesse de la partie de l'échantillon fluide avançant à travers le conduit ; et
la pluralité d'éléments chauffants étant configurée pour chauffer de façon cumulative la partie de l'échantillon fluide.

6. Procédé de génération d'hydrogène et d'électricité pour un analyseur de fluide qui nécessite un écoulement de gaz H₂ et une puissance électrique pour fonctionner (19), comportant les étapes consistant à :
1) amener de l'eau ;
2) convertir l'eau en une vapeur ;
3) combiner la vapeur avec un hydrure métallique pour générer de l'hydrogène ;
4) introduire l'hydrogène dans l'analyseur de fluide ;
5) fournir de l'hydrogène provenant de l'analyseur de fluide à une pile (44) à combustible ;
6) générer de l'électricité à l'aide de la pile à combustible à partir de l'hydrogène ;
7) fournir de l'électricité à l'analyseur de fluide ;
8) convertir de l'eau générée par la pile à combustible en une vapeur ; et
9) répéter les actions 3-8 du procédé dans un ordre quelconque selon le besoin.

7. Système selon la revendication 1, le générateur de gaz hydrogène ne comprenant pas de pompe à liquide.

8. Système selon la revendication 1, l'analyseur de fluide étant configuré pour analyser un échantillon mélangé à de l'air.
